# EUROPEAN PATENT APPLICATION

(11) **EP 4 275 878 A2**
(43) Date of publication of application: **15.11.2023**
(21) Application number: 23199982.2
(22) Date of filing: 10.02.2020
(51) Int. Cl.: B29L 31/34

(54) **TEXTILE COVERING FOR ELECTRONIC DEVICE**

(30) Priority: 25.02.2019 US 201916285033
(62) Divisional of application: 20710377.1
(71) Applicant: Microsoft Technology Licensing, LLC, Redmond, WA 98052-6399 (US)
(72) Inventor: BOGAN, Kelly Marie, Redmond, 98052-6399 (US); GHIONI, Lincoln Matthew, Redmond, 98052-6399 (US); CHURIKOV, Anatoly, Redmond, 98052-6399 (US); SANDOVAL, Paul Ryan, Redmond, 98052-6399 (US)
(74) Representative: Murgitroyd & Company

(57) **Abstract**

A textile covering for an electronic device comprises one or more structural fibers woven into a seamless tube, the seamless tube configured to encircle at least a portion of the electronic device; one or more conductive fibers woven into the seamless tube; and one or more heat-shrink fibers woven into the seamless tube. The heat-shrink fibers shrink when the seamless tube is heated above a threshold temperature, thereby constricting the seamless tube around the electronic device.

## Description

### BACKGROUND

Some electronic devices may include a covering that provides a visually-appealing appearance and/or a pleasing tactile user interface. Providing a suitable textile covering for an electronic device that embodies these characteristics while also avoiding additional complexity and/or cost in corresponding manufacturing and assembly processes can prove challenging.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

Examples are disclosed that relate to textile coverings for electronic devices and methods for manufacturing textile coverings for electronic devices. In one example, a textile covering for an electronic device comprises one or more structural fibers woven into a seamless tube, the seamless tube configured to encircle at least a portion of the electronic device. The textile covering also comprises one or more heat-shrink fibers woven into the seamless tube. The heat-shrink fibers shrink when the seamless tube is heated above a threshold temperature, thereby constricting the seamless tube around the electronic device. Additionally or alternatively, the textile covering may comprise one or more adhesive fibers woven into the seamless tube. The one or more adhesive fibers adhere the textile covering to the electronic device.

Another example provides a method for manufacturing a textile covering for an electronic device. The method comprises weaving one or more structural fibers into a seamless tube, the seamless tube configured to encircle at least a portion of the electronic device. The method also comprises weaving one or more heat-shrink fibers and/or one or more adhesive fibers into the seamless tube. When the textile covering comprises the one or more heat-shrink fibers, the method comprises heating the seamless tube above a threshold temperature, thereby constricting the seamless tube around the electronic device. When the textile covering comprises the one or more adhesive fibers, the method comprises adhering the textile covering to the electronic device via the adhesive fibers.

### BRIEF DESCRIPTION OF THE DRAWINGS

FIG. 1 shows an example of a textile covering for an electronic device according to examples of the present disclosure.
FIG. 2 illustrates another example of a textile covering for an electronic device according to examples of the present disclosure.
FIG. 3 shows an unassembled view of a textile covering for an electronic device including one or more heat-shrink fibers.
FIG. 4 shows an unassembled view of a textile covering for an electronic device including one or more adhesive fibers.
FIG. 5 shows an end view of the textile covering of FIG. 1.
FIG. 6 shows an end view of the textile covering of FIG. 2 viewed from a tapered end.
FIG. 7 shows an end view of the textile covering of FIG. 2 viewed from the non-tapered end.
FIG. 8 shows an unassembled view of a textile covering for an electronic device including one or more conductive fibers.
FIG. 9 is a block diagram of an example method for manufacturing a textile covering for an electronic device according to examples of the present disclosure.

### DETAILED DESCRIPTION

Electronic device coverings may provide a device with a visually pleasing and/or personalized appearance, as well as provide a comfortable tactile experience when touched. For example, a textile covering may mask unappealing parts of the electronic device, such as areas that are formed from different materials, openings in the device, or components such as speakers, lights, or sensors,

In some examples, the textile covering may be configured as a tube that encircles at least a portion of the electronic device. However, tubular textile coverings that include one or more seams may provide a less-than-desirable user experience. For example, a seam may detract from the appearance of the covering and the underlying device. Further, a seam also may hinder or negatively impact the user's tactile interactions with the covering, particularly if it obstructs or overlies a location where the user intends to touch or grip the device.

Additionally, utilizing a seam may add complexity and/or cost to the covering's assembly and manufacturing processes. For example, in addition to sewing the seam itself, the tube may further require trimming, smoothing, and/or other post-processing procedures to smooth raw edges, treat, or otherwise finish the seam.

Accordingly, and in one potential advantage of the present disclosure, a textile covering for an electronic device comprises a seamless tube. As described in more detail below, utilizing the seamless tube may simplify the covering's assembly and/or manufacturing, while also contributing to a pleasing visual and tactile user experience. The seamless tubes may include heat-shrink fibers and/or adhesive fibers to improve manufacturabitity and related installation considerations of the covering.

In some examples, textile coverings of the present disclosure also may provide electronic devices with an intuitive tactile user interface. For example, as described in more detail below, one or more locations on the device may be designated by portions of the textile having distinctive characteristic(s), such as a unique or contrasting tactile feel, a different color, etc. In this manner, users may be guided or naturally drawn to touch or grip the device at such locations.

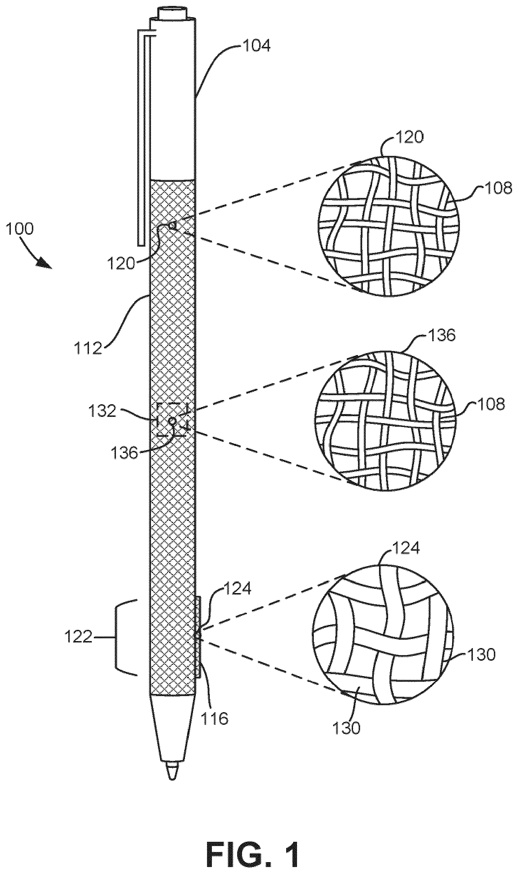

FIG. 1 shows one example of a seamless, tubular textile covering 100 encircling a portion of an electronic device. In the example of FIG. 1, the electronic device comprises a hand-held pen 104 (or stylus) configured to provide user input to a computing device. The pen 104 may also include one or more components, such as buttons, sensors and/or haptic feedback actuators. In some designs, these components could detract from the device's appearance. In such examples, the textile covering 100 may provide the device with a more pleasing and uniform aesthetic, while also augmenting a user's tactile experience with the device.

As shown in FIG. 1 and described in more detail below, the textile covering 100 comprises one or more structural fibers 108, such as a thread or other yarn that is woven into a seamless tube 112. In different examples the structural fiber(s) 108 may comprise natural and/or synthetic fibers, such as cotton, silk, wool, nylon, polyester, metallic, composite, and/or other materials. Additionally, and as described in more detail below, the textile covering may include one or more heat shrink fibers and/or one or more adhesive fibers woven into the seamless tube.

The seamless tube 112 may be formed via any suitable technique, such as by weaving the one or more structural fibers 108 on a loom. In other examples, knitting, sewing, felting, or other techniques may be utilized. As described below, the yarns may be woven together in a plain weave pattern, in which a single crosswise or weft fiber alternates over and under a single lengthwise or warp fiber. It will be appreciated that the seamless tube may have any other suitable dimensions and textile characteristics that accommodate different types and configurations of electronic devices. For example, the seamless tube may be configured to cover the entire electronic device or only a portion of the device.

In some examples, multiple textile coverings may be created by weaving a single, continuous seamless tube that is then cut to produce coverings of a desired length. Each covering may then be finished using any suitable finishing processes, and treated as a piece part during assembly of the electronic device. Producing the textile covering in this manner may provide operational and cost advantages. However, it will also be appreciated that the textile covering may be produced in any other suitable manner, including producing one at a time.

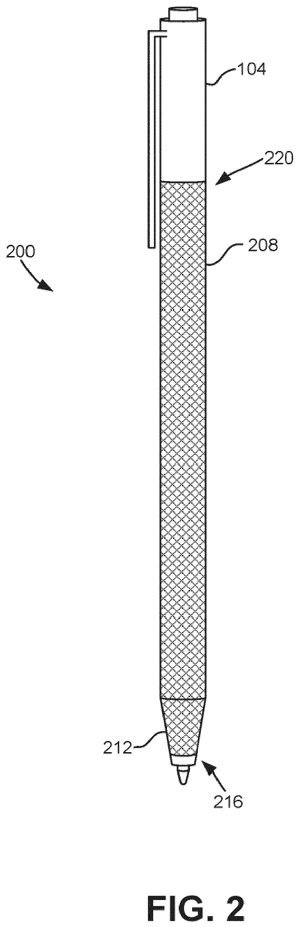

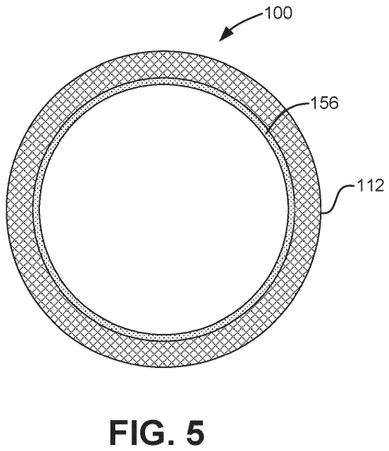

In the example of FIG. 1 and with reference also to FIG. 5, the seamless tube 1 12 takes the form of a cylinder having a substantially uniform diameter along its length. In other examples, suitable textile coverings for an electronic device may have a variety of other forms or structures. For example, FIG. 2 shows another example of a textile covering 200 for the pen 104 that comprises a seamless tube 208 including a tapered end that form-fits to a tapered portion of the pen 104.

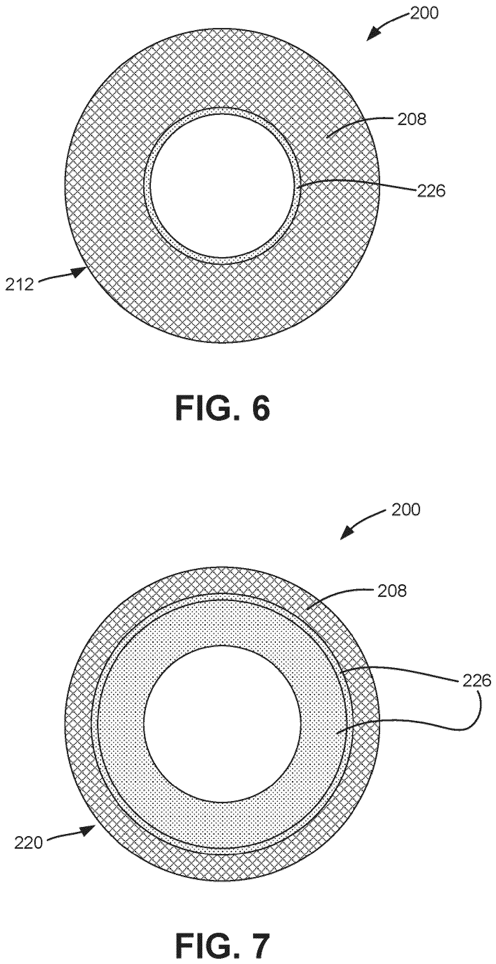

In this example, the seamless tube 208 comprises a tapered end 212 configured to encircle and envelop the tapered portion 216 of the pen 104. FIG. 6 shows an end view of the seamless tube 208 viewed from the tapered end 212. FIG. 7 shows an end view of the seamless tube 208 from the non-tapered end 220 opposite the tapered end 212. In various examples, the non-tapered portion of the seamless tube 208 may have any suitable circumference, and similarly may taper down to any suitable circumference at the distal end of the tapered end 212. The circumference may taper down over any suitable distance. In different examples, any suitable dimensions and configurations of a seamless tube comprising one or more tapered ends may be utilized to accommodate different configurations of electronic devices.

It will also be appreciated that various characteristics of the textile, such as the EPI and PPI, may be configured in any suitable manner to accommodate the structure of the tapered seamless tube 208. For example, these characteristics may change in locations where the textile tapers. In this manner, the textile covering 200 may conform to an underlying structure of the electronic device to provide a desired form factor or achieve an intended user experience.

A variety of suitable methods may be used to create such varying forms or structures. In one example of producing a tapered end, the seamless tube 208 may be woven on a loom that includes one or more adjustable reeds. When the loom is set up, a lengthwise or warp fiber may be threaded through heddles that move the structural fibers into a pattern, then through a "V" reed that sets a density of the fibers. By collapsing the V reed, the fibers may be compacted into a denser structure that reduces the diameter of the seamless tube to produce a tapered end. In this manner, the seamless tube 208 may be woven with a variety of textures and/or shapes.

Additionally and in some examples, different types of fibers may be utilized to alter the shape, texture, and/or other properties of the seamless tube. For example, and with reference again to FIG. 1, the structural fibers 108 of seamless tube 112 may include two or more different fibers that each comprise a different material. In one example, the structural fibers 108 may include a nylon air-textured yarn along with a stiffer metallic fiber. In this manner, different structural fibers may utilize materials having different properties and/or other characteristics, such as varying stiffness/softness, elasticity, weight, etc., to provide a variety of tactile user experiences. Additionally and as described in more detail below, other types of fibers including heat-shrinking, adhesive, and/or conductive fibers, may be woven into the seamless tube.

As noted above, incorporating different textures into a textile covering may augment a user's tactile experience with an electronic device. Accordingly, the seamless tube 112 may comprise a plurality of differently-textured areas to provide a user of the pen 104 with a different tactile experience in each area. For example, the textile covering 100 may provide a grip area 122 that features a softer texture, such as a sateen weave, as compared to other areas of the textile covering. In this manner, the user may have a more comfortable tactile experience and may be more inclined to grip the pen at the grip area 122.

In some examples, the textile covering may be made thicker in one or more areas to provide the user with visual and tactile cues for where and/or how to grip the device. For example, the grip feature described above may comprise a raised area 116 that projects outwardly from the seamless tube 112. The structural fibers in the raised area 116 may differ from the structural fibers in the rest of the seamless tube 112. For example, cutout view 120 depicts the structural fibers 108 that comprise most of the seamless tube 112 in the example of FIG. 1. In contrast and as schematically shown in cutout view 124, the raised area 116 of the seamless tube 112 comprises larger structural fibers 130. As one example, the larger structural fibers 130 may comprise a thick yarn with a greater diameter and heavier weight than the structural fibers 108,

Additionally and in some examples, differently-textured areas on the textile covering may be used to guide the user to a location of an underlying component of the pen 104. Such components may include one or more haptic feedback mechanisms, such as a linear resonant actuator, input buttons, pressure or touch sensors, biometric sensors, etc. Utilizing unique textures at these locations may also enhance tactile feedback when the user interacts with such components,

Such different textures in a textile covering may be provided in a variety of ways. For example, as described above, a loom may be used to weave various textures, forms, and materials into the seamless tube 112. In other examples, one or more post-processing treatments may be applied to change the texture of the seamless tube 112. Some non-limiting examples of post-processing treatments may include trimming, chemical processing, or applying additional materials onto the seamless tube 112. In other examples, the yarns or other structural fibers may have any other suitable structure configurable to create differently textured areas within the seamless tube 112.

In some examples, different textures may also be provided by incorporating two or more different weave patterns at different locations of the textile covering. For example, one or more of satin, twill, basket weave, and plain weave patterns may utilized at different locations. Accordingly, each weave pattern may provide a different tactile experience when touched.

For example and with continued reference to FIG. 1, the seamless tube 112 may include a rough textured area 132 in which the structural fibers 108 may be interwoven with a different weave pattern than in the remainder of the seamless tube 112. As illustrated in cutout view 136, in this example the structural fibers 108 in the rough textured area 132 may be woven together in a basket weave pattern, wherein two or more structural fibers 108 are grouped together and woven as one. In contrast, and as shown in the cutout view 120, in the remainder of the seamless tube 112 the same structural fibers 108 may be woven together in a plain weave pattern.

In this manner, the basket weave pattern may provide a coarser texture in the rough area 132 as compared to the plain weave pattern utilized in other portions of the cover. It will also be appreciated that in other examples, different weave patterns may be incorporated to provide other effects, such as making the texture smoother.

The seamless tube 112 may additionally or alternatively include one or more differently-colored areas. Like the differently-textured areas, different colors may indicate various functional areas on the pen 104, such as a location of a button or a sensor. For example, the large structural fibers 130 in the raised area 116 may be given a different color that contrasts with the structural fibers 108 in the remainder of the covering. This may highlight the grip area 122 for users. In another example, the rough textured area 132 may be a different color than the remainder of the seamless tube 112 to indicate the location of a button or sensor.

In some examples, different weave patterns may be used to incorporate different colors into the seamless tube 112. For example, a jacquard weave may be used to incorporate structural fibers of different colors at different positions on the seamless tube 112 to weave differently-colored areas or different patterns directly into the textile.

It will also be appreciated that such differently-colored areas may be provided in any suitable manner, such as using one or more post-processing treatments. Some non-limiting examples of post-processing color treatments include dying, bleaching, or depositing one or more colored materials on the seamless tube 112. It will be appreciated that these and other post-processing treatments described herein may be applied at any point during manufacturing or assembly of the textile covering 100 and pen 104, including before and/or after the textile covering 100 is fitted over the device.

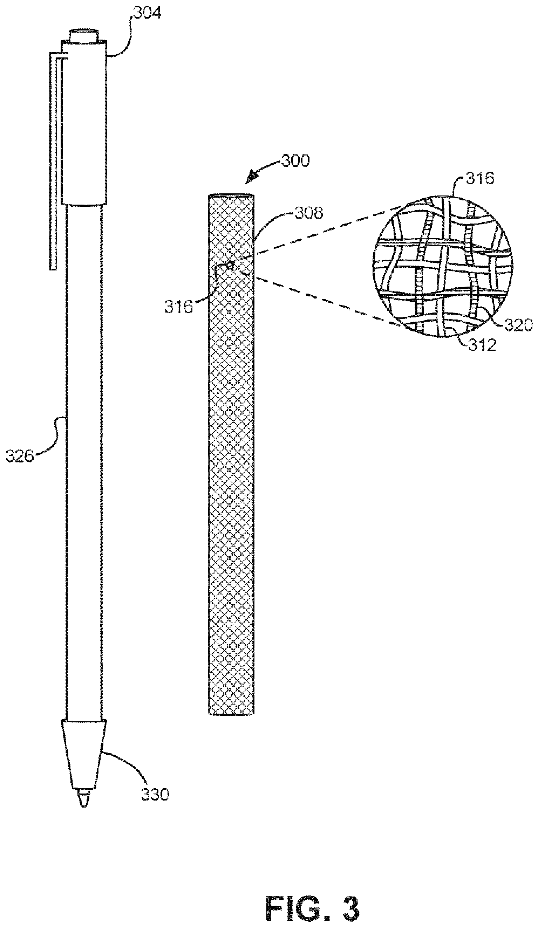

As described in more detail below and with reference now to FIGS. 3-8, a non-tapered seamless tube and/or a tapered seamless tube as described above may further comprise one or more heat-shrink fibers, one or more adhesive fibers, one or more conductive fibers, an adhesive layer, and/or any combination of these features. FIG. 3 shows an example of an unassembled non-tapered textile covering 300 and corresponding electronic device in the form of pen 304. Like the examples described above with reference to FIGS. 1 and 2, the textile covering 300 comprises a seamless tube 308 woven with one or more structural fibers 312. In some examples, to install the textile covering 300 on the pen 304, the seamless tube 308 may be slid over one end of the pen 304. It will also be appreciated that the textile covering 300 may be installed on the pen 304 in any other suitable manner.

To facilitate an easier assembly process, in some examples the seamless tube 308 may comprise one or more heat-shrink fibers. In these examples, and in one potential advantage of the present disclosure, the heat-shrink fibers may be configured to stretch while being slid over the pen 304, and then constrict around at least a portion of the pen when heated. In the example of FIG. 3 and as shown in cutout 316, one or more heat-shrink fibers 320 may be woven into the seamless tube 308 in an alternating manner with the structural fibers 312. In other examples, the one or more heat-shrink fibers 320 may be incorporated into the seamless tube 308 in any other suitable manner.

The one or more heat-shrink fibers 320 may comprise any suitable heat-shrink material. Some examples of suitable heat-shrink fibers 320 include a polyester, lycra, or elastane core surrounded by a natural or synthetic material such as nylon. In this manner, the one or more heat-shrink fibers 320 may complement the material properties of the structural fibers 312 by providing the seamless tube 308 with heat-shrink properties.

Each heat-shrink fiber 320 may be configured to shrink when the seamless tube 308 is heated to a temperature above a threshold temperature, thereby constricting the seamless tube 308 around the barrel 326 of the pen 304. In some examples, to facilitate easier assembly, the seamless tube 308 may be woven with a slightly larger diameter than the barrel 326 of the pen 304. After sliding and positioning the seamless tube 308 over the barrel 326 of pen 304, the tube may be heated above a threshold temperature, such as approximately 250-260 °C for a polymer yarn, to cause the heat-shrink fibers 320 to constrict and squeeze the tube against the barrel of the pen. In this manner, the seamless tube 308 may accommodate and be securely fitted to a variety of form factors of the underlying device.

For example, the heat-shrink fibers 320 may enable a seamless tube to accommodate a tapered portion of an electronic device without weaving a tapered end into the seamless tube itself. In one example, the length of seamless tube 308 of FIG. 3 may be extended to also enclose the tapered end 330 of the pen 304. Once installed over the barrel 326 and tapered end 330, the seamless tube 308 is heated above a threshold temperature that causes the heat-shrink fibers to constrict and form-fit a distal end of the tube to the tapered end.

In other examples, a seamless tube that includes a woven tapered end, such as the seamless tube 208 of FIG. 2, may incorporate heat-shrink fibers within the woven tapered end. In this manner, the heat-shrink fibers may enable the tapered end to more securely seat around the corresponding underlying tapered structure. In some examples, the heat-shrink fibers may enable the tapered end of a seamless tube to shrink to a narrower diameter than may be woven on a loom.

In some examples, a seamless tube of a textile covering may additionally or alternatively include one or more adhesive fibers woven into the tube. In these examples, the one or more adhesive fibers may fuse or adhere the seamless tube to the underlying structure of an electronic device. Examples of adhesive fibers that may be utilized include nylon and polyester filaments that melt or fuse when heated above a threshold temperature.

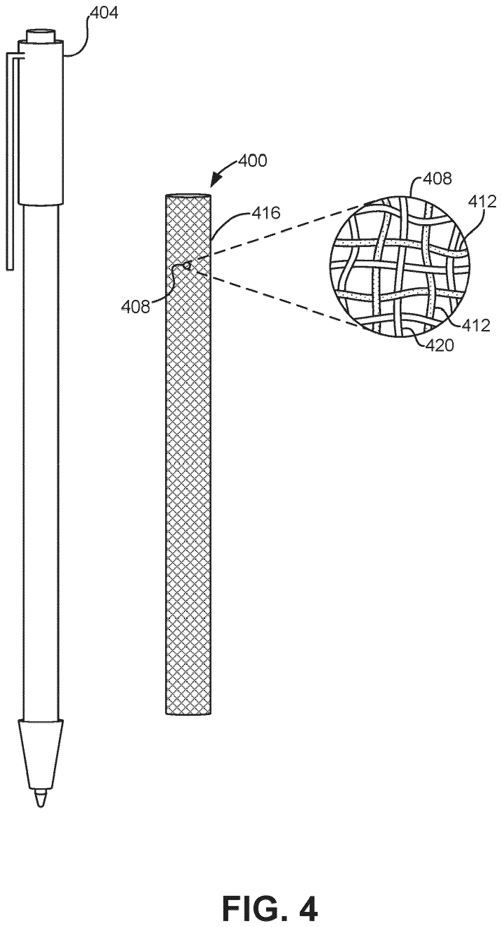

In one example and with reference now to FIG. 4, a textile covering 400 may comprise a seamless tube 416 that includes one or more adhesive fibers 412. The one or more adhesive fibers may be incorporated in any suitable manner. For example, and as shown in cutout 408, one or more adhesive fibers 412 may be woven into seamless tube 416 in an alternating manner with one or more structural fibers 420. In this manner, the seamless tube 416 may be adhered to a surface of the pen 404 by activating the one or more adhesive fibers 412 when the textile covering 400 is assembled on the pen.

In other examples, a textile covering may be adhered to an electronic device via a layer or film of adhesive material deposited on an inner surface of the covering. For example, FIG. 5 shows an end view of the textile covering 100 of FIG. 1. As shown in FIG. 5, the textile covering 100 may include an inner adhesive layer 156 on the inner surface of the seamless tube 112, with the adhesive layer configured to adhere the tube to the pen 104. The adhesive layer 156 may comprise any suitable adhesive material, such as a polyurethane or thermoplasti c heat-activated film, a pressure-sensitive coating, or other suitable adhesive. In this example, the adhesive layer 156 is positioned adjacent to the barrel of pen 104 when the seamless tube 112 is slid over the pen. In other examples, the adhesive layer 156 may initially be formed on an outer surface of the seamless tube 112, which is then inverted before or during assembly of the pen 104. In different examples, the adhesive layer may cover substantially all of the inner surface of the seamless tube 112, or one or more portions of the inner surface.

FIGS. 6 and 7 illustrate similar end views of the textile covering 200 of FIG. 2. FIG. 6 shows an end view of the seamless tube 208 viewed from the tapered end 212. FIG. 7 shows an end view of the textile covering 200 from the opposite non-tapered end 220. As shown in FIGS. 6 and 7, the textile covering 200 may also comprise an inner adhesive layer 226, which may follow the shape of the inner surface of seamless tube 208 into the tapered end 212.

In some examples, one or more of the textile coverings described herein may be configured to be interchangeable with other coverings. In this manner, and with reference to the example of FIG. 1, the pen 104 may accommodate one or more different textiles coverings in addition to the textile covering 100. In this manner, different textile coverings may be selected to accommodate different ergonomic preferences and/or accessibility requirements of various users. For example, different features of the textile covering 100 may be particularly configured for users living with arthritis or other dexterity-related conditions, for left-handed or right-handed users, or others. The textile covering 100 may also be interchangeable for cosmetic purposes, such as to enable users to customize the device's color.

In some examples, a seamless tube of a textile covering may additionally or alternatively include one or more conductive fibers woven into the tube that may complement functionality of an underlying electronic device. For example, sensing and/or output functionali ty of a device may be provided or enhanced by incorporating one or more conductive fibers into a textile covering.

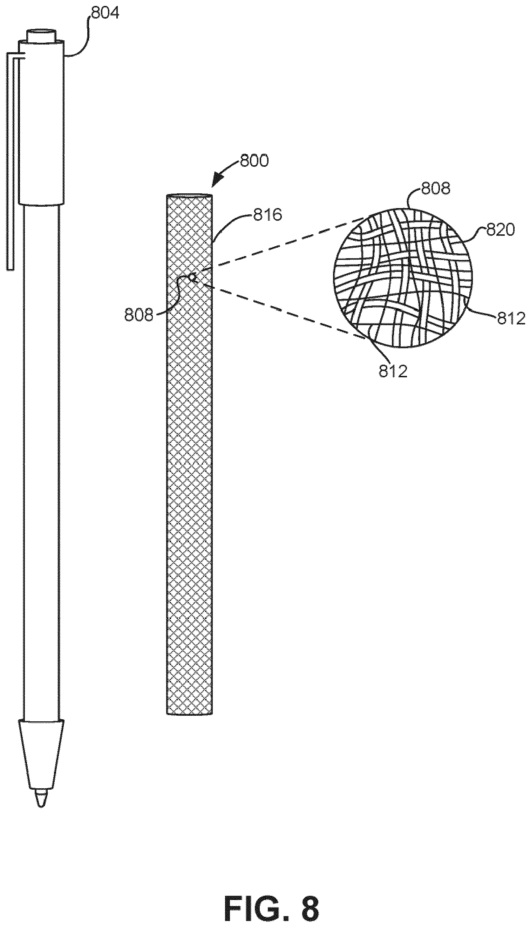

With reference now to FIG. 8, a textile covering 800 may include electronic functionality that complements a pen 804. As schematically illustrated in cutout 808, one or more conductive fibers 812 may be sewn into seamless tube 816 over one or more structural fibers 820. In other examples, the conductive fibers 812 may be woven or incorporated into the seamless tube 816 in any other suitable manner. For example, the conductive fibers 812 may be woven into the seamless tube 816 along with the structural fibers 820 in a manner similar to the heat-shrink fibers 320 in the example of FIG. 3 described above, or similar to the adhesive fibers 412 in the example of FIG. 4.

The one or more conductive fibers 812 may comprise any suitable material or structure. In some examples, each of the conductive fibers 812 may comprise an intrinsically conductive wire covered by a textile material, such as a silver or copper core covered with nylon or polyester. For example, a conductive yarn may be formed via a pull through yarn process. In this manner, robust, wrapped wires may be produced that may be woven into the seamless tube 816.

In another example, each of the one or more conductive fibers 812 may comprise a nonconductive material, such as a polymer, monofilament, or staple filament, that is treated with a conductor, such as copper or silver, and formed into a yarn. In other examples, each conductive fiber 812 may comprise a conductive yarn coated with an enamel dielectric coating. In this manner, the dielectric coating may prevent the conductive fibers 812 from short-circuiting.

The one or more conductive fibers 812 may provide the textile covering 800 with touch-sensing or other electronic capability. For example, the one or more conductive fibers 812 may comprise a resistive or capacitive touch sensor, pressure sensor, and/or proximity sensor, an antenna, an inductive coil for wireless charging, an inductive sensor, or any other suitable electronic component. The conductive fibers 812 may additionaₗly or alternatively facilitate connections with one or more output components and/or indicators, such as standalone lights or LED arrays, which in some examples may be printed on flexible circuit boards.

Utilizing conductive fibers in this manner may provide the pen 804 with a wide range of functionality. For example, the one or more conductive fibers 812 may comprise a touch sensor integrated into the textile covering 800 and configured to detect how a user is holding the pen 804. In some examples, the user's grip on the pen 804 may be used to predict how the user's hand may occlude a display of a tablet computing device, which may respond by rearranging how user interface elements are displayed. Similar inputs may also help the tablet computing device filter out noise from the user's hand contacting a touch-screen display, or rearrange the user interface to accommodate preferences of left- or right-handed users. In yet another example, the one or more conductive fibers 812 may also provide biometric sensing capabilities, which may be used to help a computing device identify the user.

Accordingly, by weaving the one or more conductive fibers 812 into the seamless tube 816, sensing functionality may be provided by the textile covering 800. In some examples, the one or more conductive fibers 812 may form a continuous sensor around the entirety of the seamless tube 816. In other examples, electronic functionality may be provided by depositing one or more conductive traces on the textile material. For example, conductive traces may be printed on an inside or outside surface of the textile by processes such as silk screening or ink jet printing.

It will be appreciated that textile coverings of the present disclosure may or may not include electronic functionality and/or conductive components. For example, a textile covering configured to cover an electronic device for cosmetic and/or tactile purposes may not include conductive properties.

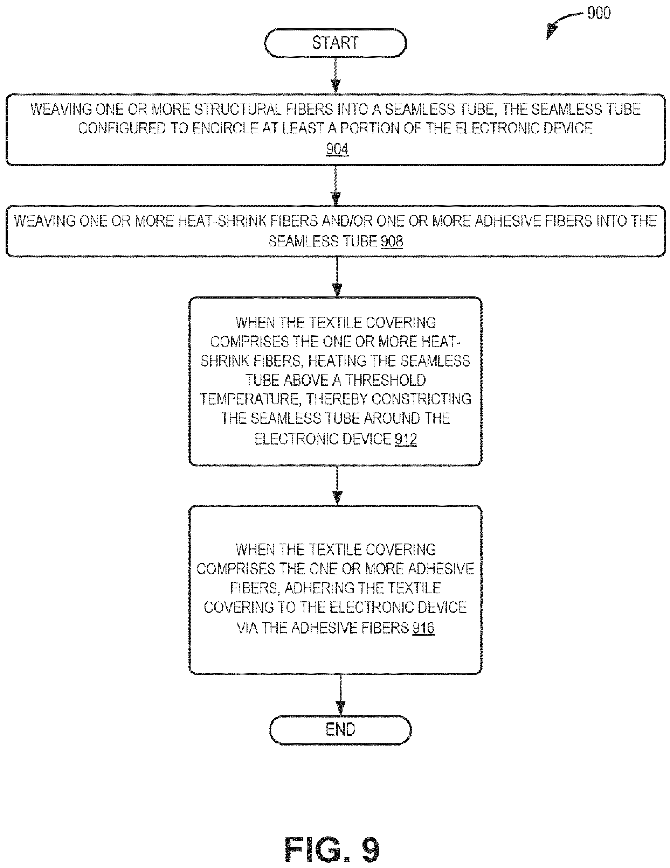

With reference now to FIG. 9, a flow diagram is provided depicting an example method 900 for manufacturing a textile covering for an electronic device. The following description of method 900 is provided with reference to the materials and components described herein and shown in FIGS. 1-8. It will be appreciated that method 900 also may be performed in other contexts using other suitable materials and components,

At 904, the method 900 includes weaving one or more structural fibers into a seamless tube that is configured to encircle at least a portion of the electronic device. At 908, the method 900 includes weaving one or more heat-shrink fibers and/or one or more adhesive fibers into the seamless tube. At 912, the method 900 includes, when the textile covering comprises the one or more heat-shrink fibers, heating the seamless tube above a threshold temperature to constrict the seamless tube around the electronic device. At 916, the method 900 includes, when the textile covering comprises the one or more adhesive fibers, adhering the textile covering to the electronic device via the adhesive fibers.

The following paragraphs provide additional support for the claims of the subject application. One aspect provides a textile covering for an electronic device, the textile covering comprising: one or more structural fibers woven into a seamless tube, the seamless tube configured to encircle at least a portion of the electronic device; and one or more heat-shrink fibers woven into the seamless tube, wherein the heat-shrink fibers shrink when the seamless tube is heated above a threshold temperature, thereby constricting the seamless tube around the electronic device. The textile covering may additionally or alternatively include, wherein the seamless tube further comprises a tapered end. The textile covering may additionally or alternatively include, wherein the one or more heat-shrink fibers comprise one or more polyester or elastane fibers. The textile covering may additionally or alternatively include, an adhesive layer configured to adhere the textile covering to the electronic device. The textile covering may additionally or alternatively include, one or more adhesive fibers woven into the seamless tube, wherein the one or more adhesive fibers adhere the textile covering to the electronic device. The textile covering may additionally or alternatively include, wherein the one or more structural fibers comprise two or more different structural fibers that each comprise a different material. The textile covering may additionally or alternatively include, wherein the seamless tube further comprises a plurality of differently-textured areas. The textile covering may additionally or alternatively include, wherein each of the differently-textured areas comprises a differently-sized structural fiber. The textile covering may additionally or alternatively include, wherein each of the differently-textured areas comprises a different weave pattern. The textile covering may additionally or alternatively include, wherein one or more of the plurality of differently-textured areas indicate an underlying component of the electronic device. The textile covering may additionally or alternatively include, one or more conductive fibers woven into the seamless tube. The textile covering may additionally or alternatively include, wherein the one or more conductive fibers provide inputs to the electronic device. The textile covering may additionally or alternatively include, wherein the electronic device comprises a hand-held pen configured to provide user input to a computing device.

Another aspect provides a textile covering for an electronic device, the textile covering comprising: one or more structural fibers woven into a seamless tube, the seamless tube configured to encircle at least a portion of the electronic device; and one or more adhesive fibers woven into the seamless tube, wherein the one or more adhesive fibers adhere the textile covering to the electronic device. The textile covering may additionally or alternatively include, wherein the seamless tube further comprises a tapered end. The textile covering may additionally or alternatively include, wherein the one or more structural fibers comprise two or more different structural fibers that each comprise a different material. The textile covering may additionally or alternatively include, wherein the seamless tube further comprises a plurality of differently-textured areas. The textile covering may additionally or alternatively include, wherein each of the differently-textured areas comprises a differently-sized structural fiber. The textile covering may additionally or alternatively include, wherein each of the differently-textured areas comprises a different weave pattern. The textile covering may additionally or alternatively include, wherein one or more of the plurality of differently-textured areas indicate an underlying component of the electronic device. The textile covering may additionally or alternatively include, one or more conductive fibers woven into the seamless tube. The textile covering may additionally or alternatively include, wherein the one or more conductive fibers provide inputs to the electronic device. The textile covering may additionally or alternatively include, wherein the electronic device comprises a hand-held pen configured to provide user input to a computing device.

Another aspect provides a method for manufacturing a textile covering for an electronic device, the method comprising: weaving one or more structural fibers into a seamless tube, the seamless tube configured to encircle at least a portion of the electronic device, weaving one or more heat-shrink fibers and/or one or more adhesive fibers into the seamless tube; when the textile covering comprises the one or more heat-shrink fibers, heating the seamless tube above a threshold temperature, thereby constricting the seamless tube around the electronic device; and when the textile covering comprises the one or more adhesive fibers, adhering the textile covering to the electronic device via the adhesive fibers.

It will be understood that the configurations and/or approaches described herein are exemplary in nature, and that these specific embodiments or examples are not to be considered in a limiting sense, because numerous variations are possible. The specific routines or methods described herein may represent one or more of any number of strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

The present teaching may also extend to one of more of the following numbered clauses:
1. A textile covering for an electronic device, the textile covering comprising:
   one or more structural fibers woven into a seamless tube, the seamless tube configured to encircle at least a portion of the electronic device; and
   one or more heat-shrink fibers woven into the seamless tube,
   wherein the heat-shrink fibers shrink when the seamless tube is heated above a threshold temperature, thereby constricting the seamless tube around the electronic device.
2. The textile covering of clause 1, wherein the seamless tube further comprises a tapered end.
3. The textile covering of clause 1, further comprising an adhesive layer configured to adhere the textile covering to the electronic device.
4. The textile covering of clause 1, further comprising one or more adhesive fibers woven into the seamless tube, wherein the one or more adhesive fibers adhere the textile covering to the electronic device.
5. The textile covering of clause 1, wherein the one or more structural fibers comprise two or more different structural fibers that each comprise a different material.
6. The textile covering of clause 1, wherein the seamless tube further comprises a plurality of differently-textured areas.
7. The textile covering of clause 6, wherein one or more of the plurality of differently-textured areas indicate an underlying component of the electronic device.
8. The textile covering of clause 1, further comprising one or more conductive fibers woven into the seamless tube.
9. The textile covering of clause 8, wherein the one or more conductive fibers provide inputs to the electronic device.
10. A textile covering for an electronic device, the textile covering comprising:
   one or more structural fibers woven into a seamless tube, the seamless tube configured to encircle at least a portion of the electronic device; and
   one or more adhesive fibers woven into the seamless tube, wherein the one or more adhesive fibers adhere the textile covering to the electronic device.
11. The textile covering of clause 10, wherein the seamless tube further comprises a tapered end.
12. The textile covering of clause 10, wherein the one or more structural fibers comprise two or more different structural fibers that each comprise a different material.
13. The textile covering of clause 10, wherein the seamless tube further comprises a plurality of differently-textured areas.
14. The textile covering of clause 13, wherein one or more of the plurality of differently-textured areas indicate an underlying component of the electronic device.
15. The textile covering of clause 10, further comprising one or more conductive fibers woven into the seamless tube.

## Claims

1. A textile covering for an electronic device, the textile covering comprising:
one or more structural fibers woven into a seamless tube, the seamless tube configured to encircle at least a portion of the electronic device;
one or more conductive fibers woven into the seamless tube; and
one or more heat-shrink fibers woven into the seamless tube,
wherein the heat-shrink fibers shrink when the seamless tube is heated above a threshold temperature, thereby constricting the seamless tube around the electronic device.

2. The textile covering of claim 1, wherein the seamless tube further comprises a tapered end.

3. The textile covering of claim 1, further comprising an adhesive layer configured to adhere the textile covering to the electronic device.

4. The textile covering of claim 1, further comprising one or more adhesive fibers woven into the seamless tube, wherein the one or more adhesive fibers adhere the textile covering to the electronic device.

5. The textile covering of claim 1, wherein the one or more structural fibers comprise two or more different structural fibers that each comprise a different material.

6. The textile covering of claim 1, wherein the seamless tube further comprises a plurality of differently-textured areas.

7. The textile covering of claim 6, wherein one or more of the plurality of differently-textured areas are configured for indicating an underlying component of the electronic device.

8. The textile covering of claim 1, wherein the one or more conductive fibers provide inputs to the electronic device; optionally the one or more conductive fibers form a continuous sensor around the seamless tube.

9. The textile covering of claim 1, further configured to encircle a hand-held pen configured to provide user input to a computing device.

10. A textile covering for an electronic device, the textile covering comprising:
one or more structural fibers woven into a seamless tube, the seamless tube configured to encircle at least a portion of the electronic device;
one or more conductive fibers woven into the seamless tube; and
one or more adhesive fibers woven into the seamless tube, wherein the one or more adhesive fibers adhere the textile covering to the electronic device.

11. The textile covering of claim 10, wherein the seamless tube further comprises a tapered end.

12. The textile covering of claim 10, wherein the one or more structural fibers comprise two or more different structural fibers that each comprise a different material.

13. The textile covering of claim 10, wherein the seamless tube further comprises a plurality of differently-textured areas; optionally wherein one or more of the plurality of differently-textured areas are configured for indicating an underlying component of the electronic device.

14. The textile covering of claim 10, wherein the one or more conductive fibers provide inputs to the electronic device; optionally the one or more conductive fibers form a continuous sensor around the seamless tube.

15. The textile covering of claim 10, further configured to encircle a hand-held pen configured to provide user input to a computing device.
